# EUROPÄISCHE PATENTSCHRIFT

(11) **EP 3 705 010 B1**
(45) Veröffentlichungstag und Bekanntmachung des Hinweises auf die Patenterteilung: **24.11.2021**
(21) Anmeldenummer: 20160570.6
(22) Anmeldetag: 03.03.2020
(51) Int. Cl.: A47L 9/10, A47L 9/28

(54) **SAUGGUTSAMMELSTATION, SYSTEM AUS EINER SAUGGUTSAMMELSTATION UND EINEM SAUGREINIGUNGSGERÄT SOWIE VERFAHREN DAFÜR**
SUCTION COLLECTING STATION, SYSTEM COMPRISING A SUCTION COLLECTING STATION AND A SUCTION CLEANER AND METHOD FOR SAME
STATION DE COLLECTE DE PRODUIT ASPIRÉ, SYSTÈME D'UNE STATION DE COLLECTE DE PRODUIT ASPIRÉ ET D'UN APPAREIL DE NETTOYAGE PAR ASPIRATION AINSI QUE PROCÉDÉ ASSOCIÉ

(30) Priorität: 08.03.2019 DE 102019105936
(43) Veröffentlichungstag der Anmeldung: 09.09.2020
(73) Patentinhaber: Vorwerk & Co. Interholding GmbH, 42275 Wuppertal (DE)
(72) Erfinder: Büning, Thomas, 44795 Bochum (DE); Fleczok, Benjamin, 45144 Essen (DE); Frielinghaus, Robert, 44803 Bochum (DE); Helmich, Martin, 47239 Duisburg (DE); Hillen, Lorenz, 42287 Wuppertal (DE); Holz, Christian, 44137 Dortmund (DE); Isenberg, Gerhard, 50668 Köln (DE); Mosebach, Andrej, 59425 Unna (DE); Ortmann, Roman, 47057 Duisburg (DE); Schmitz, Kevin, 40599 Düsseldorf (DE); Vitz, Fabian, 42327 Wuppertal (DE); van Teeffelen, Niklas, 40223 Düsseldorf (DE); Hackert, Georg, 8832 Wilen bei Wollerau (CH)
(74) Vertreter: Müller, Enno

(56) Entgegenhaltungen:
- WO-A1-2016/093911
- US-A1- 2014 207 282
- US-A1- 2017 164 803
- US-B1- 9 462 920

## Beschreibung

### Gebiet der Technik

Die Erfindung betrifft zunächst eine Sauggutsammelstation zum Regenerieren einer Filterkammer eines Saugreinigungsgerätes, wobei die Sauggutsammelstation eine Schnittstelle zum Anschließen des Saugreinigungsgerätes, einen Sauggutsammelbehälter, ein Gebläse zum Erzeugen eines Unterdrucks in dem Sauggutsammelbehälter und einen Elektromotor zum Antrieb des Gebläses aufweist, so dass in der Filterkammer des Saugreinigungsgerätes enthaltenes Sauggut mittels des Gebläses in den Sauggutsammelbehälter förderbar ist.

Die Erfindung betrifft des Weiteren ein System aus einer Sauggutsammelstation der vorgennannten Art und einem Saugreinigungsgerät, wobei das Saugreinigungsgerät eine Filterkammer zum Sammeln von Sauggut während eines Saugreinigungsbetriebes und zumindest einen korrespondierend zu der Schnittstelle der Sauggutsammelstation ausgebildeten Geräteteilbereich aufweist, mittels welchem das Saugreinigungsgerät zur Regeneration der Filterkammer mit der Sauggutsammelstation verbindbar ist.

Des Weiteren betrifft die Erfindung ein Verfahren zum Regenerieren einer Filterkammer eines Saugreinigungsgerätes mittels einer Sauggutsammelstation, wobei das Saugreinigungsgerät mit einer Schnittstelle der Sauggutsammelstation verbunden wird und in der Filterkammer vorhandenes Sauggut mittels eines von einem Elektromotor angetriebenen Gebläses der Sauggutsammelstation in einen Sauggutsammelbehälter der Sauggutsammelstation überführt wird.

### Stand der Technik

Sauggutsammelstationen der vorgenannten Art sind im Stand der Technik bekannt. Beispielsweise können diese zur Abreinigung von sich selbsttätig fortbewegenden Saugreinigungsgeräten oder zur Abreinigung von manuell durch einen Nutzer geführten Saugreinigungsgeräten ausgebildet sein.

Die Druckschrift US 5 787 545 A offenbart beispielsweise eine Basisstation für einen Saugroboter, welche eine Ladeeinrichtung zum Laden eines Ackumulators des Saugroboters sowie einen Sauggutsammelbehälter zur Übernahme von Sauggut von dem Saugroboter aufweist. Zu diesem Zweck verfügt die Basisstation über eine Schnittstelle, an welche der Saugroboter derart ankoppeln kann, dass ein mittels eines Gebläses der Sauggutsammelstation erzeugter Unterdruck das Sauggut aus der Filterkammer des Saugroboters in den Sauggutsammelbehälter der Basisstation fördern kann. Es ist des Weiteren bekannt, dass ein derartiger Saugroboter die Basisstation selbsttätig anfahren kann, um seine Filterkammer dort aussaugen zu lassen.

Nachteilig ist, dass die entstehende Geräuschkulisse bei Betrieb des Gebläses störend für einen in der Umgebung der Sauggutsammelstation anwesenden Nutzer oder ein dort anwesendes Tier sein kann.

Ein weiterer Stand der Technik wird durch die US 2014/207282 A1 offenbart.

### Zusammenfassung der Erfindung

Ausgehend von dem vorgenannten Stand der Technik ist es Aufgabe der Erfindung, eine Sauggutsammelstation derart weiterzubilden, dass sich eine in der Nähe der Sauggutsammelstation befindliche Person und/ oder ein Tier nicht durch den Betrieb der Sauggutsammelstation gestört fühlt.

Zur Lösung der vorgenannten Aufgabe wird zunächst vorgeschlagen, dass die Sauggutsammelstation eine Steuer- und Auswerteeinrichtung aufweist, welche eingerichtet ist, einen Umgebungsstörungsparameter zu berechnen, der einen Grad einer potenziellen Störung der Umgebung durch einen Betrieb des Gebläses der Sauggutsammelstation angibt, und den Betrieb des Elektromotors automatisch in Abhängigkeit von dem Umgebungsstörungsparameter und einem Geräteparameter des Saugreinigungsgerätes zu steuern, wobei die Sauggutsammelstation des Weiteren eine Detektionseinrichtung zur Detektion eines Anwesenheitsparameters in der Umgebung der Sauggutsammelstation und/ oder eines Geräteparameters und/ oder eine Kommunikationseinrichtung zum Empfang einer Information über den Anwesenheitsparameter und/ oder Geräteparameter aufweist.

Erfindungsgemäß wird der Betrieb des Gebläses, und damit auch eine Geräuschemission, in Abhängigkeit von detektierten bzw. empfangenen Anwesenheits- und/oder Geräteparametern gesteuert, aus welchen ein Umgebungsstörungsparameter berechnet wird. Die Abreinigung bzw. Entleerung der Filterkammer des Saugreinigungsgerätes, egal ob manuell bedientes oder autonom betriebenes Saugreinigungsgerät, erfolgt somit nur, wenn keine oder eine nur geringe Lärmbelästigung der Umgebung durch den Arbeitsbetrieb der Sauggutsammelstation zu erwarten ist. Insbesondere wird der Betrieb des Elektromotors bzw. des Gebläses abhängig von einer Notwendigkeit einer Regeneration der Filterkammer und einer aktuellen Anwesenheit eines Nutzers bzw. Tieres in der Umgebung der Sauggutsammelstation gesteuert. Das Regenieren der Filterkammer wird vorzugsweise so gesteuert, dass diese nur dann erfolgt, wenn hierzu ein so definiertes tatsächliches Erfordernis besteht und der Betrieb des Elektromors/Gebläses der Sauggutsammelstation möglichst unbemerkt und/oder besonders leise erfolgt. Wesentlich ist dabei, dass die Auswerte- und Steuereinrichtung der Sauggutsammelstation den Betrieb des Gebläses in Abhängigkeit von einem ermittelten Umgebungsstörungsparameter, welcher darauf hinweist, ob eine Abreinigung der Filterkammer ohne Störung der Umgebung möglich ist, steuert, und in Abhängigkeit von einer Abreinigungsnotwendigkeit steuert, d. h. einer Information darüber, ob eine Abreinigung der Filterkammer zur vorliegenden Zeit überhaupt notwendig ist. Den Anwesenheitsparameter und/oder Geräteparameter kann die Sauggutsammelstation entweder selbst mittels einer eigenen Detektionseinrichtung detektieren oder alternativ über seine Kommunikationseinrichtung von einem externen Gerät erhalten. Anhand des detektierten und/oder empfangenen Anwesenheitsparameters bzw. Geräteparameters kann die Steuer- und Auswerteeinrichtung der Sauggutsammelstation dann die notwendigen Schritte für einen sofortigen oder späteren Betrieb des Gebläsemotors zum Regenerieren der Filterkammer des Saugreinigungsgerätes treffen.

Das Saugreinigungsgerät kann zunächst in üblicher Art und Weise an der Sauggutsammelstation andocken bzw. von einem Nutzer mit der Schnittstelle verbunden werden. Die Sauggutsammelstation detektiert dann beispielsweise mittels eines Kontaktschalters, dass das Saugreinigungsgerät mit der Sauggutsammelstation verbunden ist. Die Detektionseinrichtung der Sauggutsammelstation detektiert einen aktuellen Anwesenheitsparameter und einen aktuellen Geräteparameter bzw. bekommt diese von einem externen Gerät mitgeteilt. Die Sauggutsammelstation ist somit grundsätzlich bereit, eine Abreinigung durchzuführen, jedoch wird das Gebläse erst dann gestartet, wenn einerseits eine Notwendigkeit für die Regeneration besteht, und andererseits ein aus dem Anwesenheitsparameter berechneter Umgebungsstörungsparameter dies erlaubt.

Es wird vorgeschlagen, dass die Detektionseinrichtung der Sauggutsammelstation eine Bilderfassungseinrichtung, einen Ultraschallsensor, ein Mikrofon, ein Funkmodul und/oder einen Bewegungssensor aufweist. Gemäß dieser Ausgestaltung verfügt die Sauggutsammelstation selbst über eine oder mehrere Detektionseinrichtungen zur Detektion einer Anwesenheit beispielsweise eines Menschen, eines Tieres und/oder eines mobilen Endgerätes des Nutzers in der Umgebung der Sauggutsammelstation. Des Weiteren kann die Detektionseinrichtung auch ausgebildet sein, ein in der Umgebung der Sauggutsammelstation betriebenes Gerät, beispielsweise ein anderes Reinigungsgerät, eine Küchenmaschine, Stereoanlage oder ähnliches, zu detektieren. Die Bilderfassungseinrichtung kann beispielsweise eine Kamera, ein optischer Chip, beispielsweise ein CMOS-Chip oder CCD-Chip, sein. Des Weiteren kann ein Ultraschallsensor ein Ultraschall aussendendes Gerät in der Umgebung der Sauggutsammelstation detektieren. Ein Mikrofon kann in der Umgebung wahrnehmbare Geräusche von Personen, Tieren und/oder Geräten wahrnehmen. Ein Funkmodul kann Funksignale externer Geräte empfangen, die einen Hinweis darauf geben, dass ein Nutzer dieser Geräte in der Umgebung anwesend ist. Darüber hinaus können auch Bewegungssensoren, insbesondere optische Sensoren, verwendet werden, die Bewegungen in der Umgebung detektieren.

Die Detektionseinrichtung ist ausgebildet, Parameter zu detektieren, die einen Hinweis darauf geben, ob eine Regeneration der Filterkammer ohne Störung der Umgebung möglich ist. Zu diesem Zweck können auch anstatt selbst von der Sauggutsammelstation detektierter Parameter Anwesenheitsparameter herangezogen werden, die die Sauggutsammelstation von anderen Geräten mitgeteilt bekommt. Die Steuer- und Auswerteeinrichtung der Sauggutsammelstation prüft anhand dieser detektieren Parameter, ob zum Beispiel Bewegungen und/ oder Geräusche in der Umgebung vorhanden sind. Eine Anwesenheit eines Menschen kann beispielsweise durch die Detektion eines von einem mobilen Kommunikationsgerät, welches dieser üblicherweise mit sich führt, ausgesendeten Funksignals erkannt werden. Beispielsweise kann die Detektionseinrichtung ein Funksignal eines Mobiltelefons detektieren und/oder eine derzeit aktive drahtlose Kommunikation innerhalb eines Heimnetzwerkes. Beispielsweise kann detektiert werden, ob ein drahtloses Kommunikationsnetzwerk eines Haushalts derzeit benutzt ist. Beispielsweise kann über einen Router des Kommunikationsnetzwerkes eine aktuelle Internetnutzung ermittelt werden. Des Weiteren kann anhand der Ortungsfunktion eines mobilen Kommunikationsnetzwerkes ein aktueller Aufenthaltsort des Nutzers festgestellt werden bzw. zumindest ermittelt werden, ob der Nutzer sich derzeit innerhalb der Umgebung der Sauggutsammelstation aufhält, beispielsweise in einem bestimmten Haus, oder nicht. Die Anwesenheit des Nutzers kann des Weiteren über eine Auswertung eines Kalenders des Nutzers, einen Bewegungsmelder und/oder in der Umgebung betätigte elektrische Schalter ermittelt werden. Die Steuer- und Auswerteeinrichtung der Sauggutsammelstation kann somit detektierte Anwesenheitsparameter heranziehen, die Ergebnis einer Raumüberwachung sind. Daraus ermittelt die Steuer- und Auswerteeinrichtung einen Umgebungsstörungsparameter, welcher eine Wahrscheinlichkeit dafür angibt, dass ein Mensch (oder auch Tier) in der Umgebung der Sauggutsammelstation durch deren Betrieb gestört werden könnte. Die Sauggutsammelstation oder ein damit in Kommunikationsverbindung stehendes externes Gerät kann eine oder mehrere Raumüberwachungseinrichtungen aufweisen, die beispielsweise ausgebildet sind, ein Bewegungssignal innerhalb eines Raumes zu detektieren, einen Stromverbrauch innerhalb eines Raumes und/oder eine Betätigung eines elektrischen Schalters innerhalb eines Raumes. Ein Betrieb des Gebläses der Sauggutsammelstation kann dann unterbleiben oder abgebrochen werden, wenn ein Detektionssignal auf die Anwesenheit einer Person und/oder eines Tieres in der Umgebung der Sauggutsammelstation schließen lässt. Insbesondere kann auch eine aktivierte Lichtsteuerung detektiert werden, geöffnete Fenster, eine an- oder ausgeschaltete Heizung oder Klimaanlage, ein betätigter Lichtschalter, der Betriebsstatus einer Musikanlage, eines Staubsaugers, einer Küchenmaschine, eines Bodenbearbeitungs- oder Überwachungsroboters. Die Detektionseinrichtung kann wie zuvor erläutert ein Funkmodul, aber auch einen Ultraschallsensor aufweisen, welcher entsprechende Signale in der Umgebung detektieren kann. Bezüglich des Funkmoduls kann die Detektionseinrichtung ausgebildet sein, eine Signalstärke eines Funksignals eines mobilen Endgerätes zu ermitteln. Das Funksignal kann beispielsweise ein Bluetooth, WLAN oder GSM-Signal sein. Die Sauggutsammelstation weist entsprechend eine Bluetooth, WLAN bzw. GSM Funkempfangseinheit auf. Ebenso kann auch ein Ultraschall aussendendes Gerät mittels einer entsprechenden Detektionseinrichtung detektiert werden. Das Ultraschallsignal ist für einen Menschen nicht wahrnehmbar, kann der Steuer- und Auswerteeinrichtung der Sauggutsammelstation jedoch dazu dienen, eine Anwesenheit eines Nutzers innerhalb der Umgebung zu detektieren bzw. auf dessen Anwesenheit zu schließen. Beispielsweise kann die Sauggutsammelstation ein Ultraschallsignal aussenden, welches beispielsweise von einem mobilen Endgerät des Nutzers empfangen und beantwortet werden kann. Bei Aussenden des Signals kann ein Timer gestartet werden, der bis zu dem Empfang eines Antwortsignals läuft. Sofern die Zeitspanne bis zum Empfang des Antwortsignals unterhalb eines bestimmten Zeitschwellwertes liegt, wird angenommen, dass sich das mobile Endgerät und damit auch der Nutzer in der Umgebung der Sauggutsammelstation befinden und die Regeneration der Filterkammer unterbleiben sollte. Zudem können auch Bilderfassungseinrichtungen und/ oder Bewegungssensoren sich selbsttätig fortbewegender Bodenreinigungsgeräte zur Ermittlung eines Anwesenheitsparameters herangezogen werden. Beispielsweise kann mittels eines sogenannten SLAM-Algorithmus (Simultaneous Localisation And Mapping-Algorithmus) ermittelt werden, ob häufige Abstandsänderungen in der Umgebung der Sauggutsammelstation auftreten. Dies kann darauf hindeuten, dass sich bewegliche Objekte in der Umgebung befinden. Dies können von dem Nutzer fortgetragene und/oder fortbewegte Objekte sein, jedoch auch der Nutzer selbst oder ein in der Umgebung umherlaufendes Tier. Falls keine Bewegung detektiert wird, kann die Steuer- und Auswerteeinrichtung entscheiden, dass kein Mensch oder Tier in der Umgebung anwesend ist. In diesem Zusammenhang kann auch vorgesehen sein, dass ein sich selbsttätig fortbewegbares Gerät eine spezielle Erkundungsfahrt durch die Umgebung unternimmt. Sofern die Detektionseinrichtung der Sauggutsammelstation ein Mikrofon aufweist, kann zudem ermittelt werden, ob Geräusche in der Umgebung vorhanden sind. Bei einer akustischen Detektion kann beispielsweise auch eine Spracherkennung ausgeführt werden, die speziell menschliche Sprache erkennen kann. Darüber hinaus können jedoch auch einfach generell akustische Signale detektiert werden. Die Steuer- und Auswerteeinrichtung der Sauggutsammelstation kann neben einer Spracherkennung des Weiteren auch ausgebildet sein, die Art detektierter Geräusche zu analysieren. Dabei kann ermittelt werden, ob es sich bei den detektierten Geräuschen um Sprache, Musik, Motorengeräusche, Arbeitsgeräusche von Robotern oder ähnliches handelt. Zur Detektion eines Anwesenheitsparameters kann des Weiteren auch eine sogenannte Smart-Watch verwendet werden, die einerseits ein Anwesenheitssignal sendet, andererseits jedoch beispielsweise auch ausgebildet ist, eine Schlafaufzeichnung und/oder Schlafanalyse eines Nutzers durchzuführen. Des Weiteren kann auch ein Bett des Nutzers mit Sensoren ausgestattet sein, die eine Anwesenheit des Nutzers in dem Bett detektieren. Die Schlafaktivität des Nutzers kann von der Steuer- und Auswerteeinrichtung der Sauggutsammelstation ausgewertet werden, wobei bei Anwesenheit bzw. Schlafaktivität des Nutzers eine Abreinigung einer Filterkammer mittels der Sauggutsammelstation unterbleibt.

Des Weiteren kann die Sauggutsammelstation dazu ausgebildet sein, mittels der Kommunikationseinrichtung auf einen Kalender eines Nutzers zuzugreifen bzw. Informationen über Kalendereinträge zu empfangen. Die Sauggutsammelstation ist dadurch ausgebildet, mit einem externen Gerät zu kommunizieren, das einen in einem Datenspeicher gespeicherten Kalender des Nutzers aufweist. Die Steuer- und Auswerteeinrichtung der Sauggutsammelstation kann dann Einträge des Kalenders auswerten und enthaltene Informationen zur zeitlichen Planung des Betriebs der Sauggutsammelstation verwenden. In dem Kalender geplante Aktivitäten des Nutzers lassen auf die Abwesenheit des Nutzers in der Umgebung der Sauggutsammelstation schließen, so dass in den Abwesenheitszeiträumen entsprechend eine Aktivität der Sauggutsammelstation ausgeführt werden kann. Alternativ zu der vollständigen Unterlassung eines Betriebs der Sauggutsammelstation kann in allen vorgenannten Ausführungen alternativ ein Betrieb des Gebläses auf einer niedrigen Leistungsstufe vorgesehen sein, deren Geräuschemissionen geringer sind als die der üblicherweise verwendeten Leistungsstufe des Gebläses.

Es wird des Weiteren vorgeschlagen, dass der für den Betrieb des Gebläses ausgewertete Geräteparameter des Saugreinigungsgerätes ein Status des Saugreinigungsgerätes ist, nämlich ein Füllstand der Filterkammer, ein Ladestatus eines Akkumulators des Saugreinigungsgerätes, eine Reinigungshistorie und/oder ein Verschmutzungszustand des Saugreinigungsgerätes. Gemäß dieser Ausgestaltung ist die Sauggutsammelstation dazu ausgebildet, eine Abreinigungsnotwendigkeit eines Saugreinigungsgerätes zu ermitteln. Zu diesem Zweck kann ein Akkumulator des Saugreinigungsgerätes oder das den Akkumulator aufweisende Saugreinigungsgerät eine Information über einen Ladezustand des Akkumulators an die Sauggutsammelstation übermitteln. Des Weiteren kann das Saugreinigungsgerät Parameter übermitteln, die auf eine vorausgegangene Aufnahme von Sauggut in die Filterkammer schließen lassen, beispielsweise eine Information über Verschmutzungen innerhalb des Saugreinigungsgerätes und/ oder innerhalb der Filterkammer. Die Steuer- und Auswerteeinrichtung der Sauggutsammelstation kann anhand der detektierten und/ oder empfangenen Geräteparamater prüfen, ob unlängst eine Sauggutaufnahme mittels des Saugreinigungsgerätes erfolgt ist. Dies kann einerseits auf der Basis einer Kommunikation mit dem Saugreinigungsgerät und/ oder dem Akkumulator erfolgen, oder alternativ durch Detektionsergebnisse einer eigenen Detektionseinrichtung der Sauggutsammelstation, die entsprechende Parameter an einem mit der Sauggutsammelstation verbundenen Saugreinigungsgerät detektieren kann. In Bezug auf den Geräteparameter, welcher von der Detektionseinrichtung der Sauggutsammelstation detektiert werden kann bzw. welcher mittels der Kommunikationseinrichtung der Sauggutsammelstation von einem externen Gerät empfangen wird, wird nachfolgend noch in Bezug auf das ebenso vorgeschlagene Verfahren zum Betrieb der Sauggutsammelstation weiter ausgeführt. Die Ausführungen gelten entsprechend auch für die erfindungsgemäße Sauggutsammelstation.

Mit der Erfindung wird des Weiteren zunächst auch ein System aus einer Sauggutsammelstation und einem Saugreinigungsgerät vorgeschlagen, wobei die Sauggutsammelstation nach einer der zuvor beschriebenen Ausführungsformen ausgebildet ist, und wobei das Saugreinigungsgerät eine Filterkammer zum Sammeln von Sauggut während eines Saugreinigungsbetriebes und zumindest einen korrespondierend zu der Schnittstelle der Sauggutsammelstation ausgebildeten Geräteteilbereich aufweist, mittels welchem das Saugreinigungsgerät zur Regeneration der Filterkammer mit der Sauggutsammelstation verbindbar ist. Die zuvor in Bezug auf die erfindungsgemäße Sauggutsammelstation beschriebenen Vorteile und Merkmale gelten entsprechend auch für das eine solche Sauggutsammelstation aufweisende System.

Insbesondere wird vorgeschlagen, dass die Sauggutsammelstation und das Saugreinigungsgerät zueinander korrespondierende Kommunikationseinrichtungen aufweisen. Gemäß dieser Ausgestaltung können Anwesenheitsparameter und/oder Geräteparameter bevorzugt mittels drahtloser Kommunikation von dem Saugreinigungsgerät an die Sauggutsammelstation übermittelt werden oder von der Sauggutsammelstation von dem Saugreinigungsgerät abgerufen werden. Die korrespondierenden Kommunikationseinrichtungen können beispielsweise Bluetooth-Module, WLAN-Module oder andere sein.

Des Weiteren wird vorgeschlagen, dass das System ein drahtloses Kommunikationsnetzwerk mit einem Access Point aufweist, wobei die Kommunikationseinrichtungen der Sauggutsammelstation und des Saugreinigungsgerätes ausgebildet sind, mit dem Access Point zu kommunizieren. Diese Ausgestaltung ist besonders vorteilhaft, da in das drahtlose Kommunikationsnetzwerk des Systems zusätzlich auch andere Geräte eingebunden werden können, um über den Access Point mit der Sauggutsammelstation und/ oder dem Saugreinigungsgerät zu kommunizieren. Weitere Geräte können beispielsweise weitere Sauggutsammelstationen, Saugreinigungsgeräte, Überwachungsgeräte, Detektionseinrichtungen, Speichergeräte oder ähnliches sein. Gemäß dieser Ausgestaltung kommunizieren das Saugreinigungsgerät bzw. die weiteren Geräte und die Sauggutsammelstation nicht direkt miteinander, sondern stattdessen über den Access Point des Kommunikationsnetzwerkes. Dabei kann es jedoch auch vorgesehen sein, dass diese weiterhin alternativ auch direkt miteinander kommunizieren können. Dem Access Point kann eine Speichereinrichtung des Kommunikationsnetzwerkes zugeordnet sein, an welche sowohl die Sauggutsammelstation als auch das Saugreinigungsgerät bzw. ein oder mehrere weitere zuvor genannte externe Geräte Daten übermitteln bzw. von dieser abrufen können. Somit ist es möglich, den Teilnehmern des Kommunikationsnetzwerkes, insbesondere der Sauggutsammelstation bzw. deren Steuer- und Auswerteeinrichtung, stets aktuelle Informationen über Anwesenheitsparameter und/ oder Geräteparameter zur Verfügung zu stellen.

Insbesondere wird vorgeschlagen, dass das System mindestens ein weiteres in das Kommunikationsnetzwerk eingebundenes Gerät mit einer korrespondierenden Kommunikationseinrichtung aufweist, wobei das Gerät ausgewählt ist und/oder mit einer Einrichtung ausgestattet ist aus der Gruppe: Datenspeichereinrichtung, Akkumulator für das Saugreinigungsgerät, Bewegungssensor, Bilderfassungseinrichtung, Ultraschallsensor, Mikrofon, Funkmodul, Haushaltsgerät, Unterhaltungsgerät, Fernsteuereinrichtung. Gemäß dieser Ausgestaltung ist es nicht erforderlich, dass die Sauggutsammelstation eine eigene Detektionseinrichtung zur Detektion eines Anwesenheitsparameters und/ oder Geräteparameters aufweist. Vielmehr greift die Sauggutsammelstation auf Daten einer externen Einrichtung zu, welche Informationen über entsprechende Parameter detektiert und/oder benutzt und/oder speichert. Gemäß dieser Ausgestaltung kann insbesondere auch ein mobiles Endgerät und/oder ein anderes externes Gerät eine Fernsteuerungseinrichtung aufweisen, mit deren Hilfe ein Nutzer den Betrieb des Gebläses veranlassen bzw. vormerken lassen kann. Gemäß einer Ausgestaltung kann die Logik zur Steuerung des Gebläses alternativ auch beispielsweise innerhalb eines eine zu regenerierende Filterkammer aufweisenden Saugreinigungsgerätes selbst ausgebildet sein. Des Weiteren kann die Logik einem Akkumulator des Saugreinigungsgerätes oder auch einer Datenspeichereinrichtung des Kommunikationsnetzwerkes zugeordnet sein, beispielsweise einer Steuer- und Auswerteeinrichtung eines externen Speichers, insbesondere auch einer sogenannten Cloud. Innerhalb der externen Auswerteeinrichtung wird dann ermittelt, ob es sinnvoll ist, eine Abreinigung der Filterkammer des Saugreinigungsgerätes mittels der Sauggutsammelstation durchzuführen. Gemäß einer besonderen Ausgestaltung kann dann ein Steuerbefehl für das Gebläse der Sauggutsammelstation an die Kommunikationseinrichtung der Sauggutsammelstation übermittelt werden. Die Sauggutsammelstation selbst muss dann nur noch das Gebläse zur Abreinigung der Filterkammer bereitstellen. Gemäß dieser Ausgestaltung kann eine eigene Steuer- und Auswerteeinrichtung des Saugreinigungsgerätes ermitteln, ob seit dem letzten Regenerationsprozess ein Saugbetrieb stattgefunden hat. Eine Information über den Geräteparameter kann dann an die Sauggutsammelstation übermittelt werden, die dann eine Regeneration ausführt und/oder verschiebt. Insbesondere ist das erfindungsgemäße System auch ausgebildet, ein Verfahren der nachstehend beschriebenen Art auszuführen, wobei die diesbezüglichen Vorteile und Merkmale entsprechend auch für das erfindungsgemäße System gelten.

Mit der Erfindung wird des Weiteren ein Verfahren zum Regenerieren einer Filterkammer eines Saugreinigungsgerätes mittels einer Sauggutsammelstation vorgeschlagen, wobei das Saugreinigungsgerät mit einer Schnittstelle der Sauggutsammelstation verbunden wird und in der Filterkammer vorhandenes Sauggut mittels eines von einem Elektromotor angetriebenen Gebläses der Sauggutsammelstation in einen Sauggutsammelbehälter der Sauggutsammelstation überführt wird, wobei eine Steuer- und Auswerteeinrichtung einen Umgebungsstörungsparameter berechnet, der einen Grad einer potenziellen Störung der Umgebung durch einen Betrieb des Gebläses der Sauggutsammelstation angibt, und den Betrieb des Elektromotors automatisch in Abhängigkeit von dem Umgebungsstörungsparameter und einem Geräteparameter des Saugreinigungsgerätes steuert und, wobei eine Detektionseinrichtung der Sauggutsammelstation einen Anwesenheitsparameter in der Umgebung der Sauggutsammelstation und/ oder einen Geräteparameter detektiert, und/ oder eine Kommunikationseinrichtung der Sauggutsammelstation eine Information über den Anwesenheitsparameter und/oder Geräteparameter empfängt. Wie bereits zuvor schon in Bezug auf die erfindungsgemäße Sauggutsammelstation bzw. das erfindungsgemäße System beschrieben, kann die Sauggutsammelstation selbst mittels einer eigenen Detektionseinrichtung einen Anwesenheitsparameter detektieren, nämlich die Anwesenheit von Menschen, Tieren oder Geräten, deren Betrieb auf die Anwesenheit eines Menschen schließen lässt. Die Steuer- und Auswerteeinrichtung berechnet daraus einen Umgebungsstörungsparameter, welcher ein Maß dafür ist, dass sich ein Mensch und/oder Tier in der Umgebung durch die Sauggutsammelstation gestört fühlen könnte. Sofern erkannt wird, dass sich beispielsweise ein Mensch in der Umgebung der Sauggutsammelstation befindet, kann ein Regenerieren einer Filterkammer unterbleiben oder zumindest beispielsweise mit einer verhältnismäßig geringen Leistung des Elektromotors durchgeführt werden, so dass die beim Regenerieren der Filterkammer entstehenden Geräusche nicht als störend empfunden werden. Zusätzlich kann der Betrieb des Gebläses auch von einem oder mehreren Geräteparametern des Saugreinigungsgerätes abhängig gemacht werden, die einen Hinweis darauf geben, ob eine sofortige Regeneration der Filterkammer notwendig ist. Sofern ermittelt wird, dass eine Notwendigkeit noch nicht besteht, da die Filterkammer beispielsweise nur in sehr geringem Umfang mit Sauggut gefüllt ist, kann vorgesehen sein, die Regeneration zu verschieben, insbesondere dann, wenn mittels einer Detektionseinrichtung erkannt wurde, dass sich derzeit ein Mensch in der Umgebung der Sauggutsammelstation befindet und gestört werden könnte. Alternativ zu einer eigenen Detektionstätigkeit der Sauggutsammelstation kann es auch vorgesehen sein, dass die Sauggutsammelstation Anwesenheitsparameter und/oder Geräteparameter von einem anderen Gerät empfängt. Hierzu verfügt die Sauggutsammelstation über eine Kommunikationseinrichtung, die beispielsweise Informationen von Saugreinigungsgeräten der Umgebung, anderen Sauggutsammelstationen oder auch sonstigen Geräten empfangen kann. Die von anderen Geräten detektierten Anwesenheitsparameter und/ oder Geräteparameter können ebenso ausgewertet werden, um zu ermitteln, ob sich derzeit ein Mensch oder Tier in der Umgebung der Sauggutsammelstation befindet, oder ob ein Geräteparameter eines an die Sauggutsammelstation angeschlossenen Saugreinigungsgerätes tatsächlich zu regenerieren ist.

Insbesondere wird vorgeschlagen, dass die Detektionseinrichtung der Sauggutsammelstation als Anwesenheitsparameter eine Anwesenheit eines Menschen, eines Tieres und/oder eines in der Umgebung betriebenen Gerätes detektiert, und/oder dass die Detektionseinrichtung als Geräteparameter einen Status des Saugreinigungsgerätes, nämlich einen Füllstand der Filterkammer, einen Ladestatus eines Akkumulators, eine Reinigungshistorie und/ oder einen Verschmutzungszustand des Saugreinigungsgerätes detektiert.

Alternativ dazu kann vorgesehen sein, dass eine Detektionseinrichtung des Saugreinigungsgerätes eines in der Umgebung betriebenen Gerätes als Anwesenheitsparameter eine Anwesenheit eines Menschen, eines Tieres und/ oder eines in der Umgebung betriebenen Gerätes detektiert, und/oder dass die Detektionseinrichtung als Geräteparameter einen Status des Saugreinigungsgerätes, nämlich einen Füllstand der Filterkammer, einen Ladestatus eines Akkumulators, eine Reinigungshistorie und/oder einen Verschmutzungszustand des Saugreinigungsgerätes detektiert, wobei eine Kommunikationseinrichtung des Saugreinigungsgerätes oder des Gerätes eine Information über den Anwesenheitsparameter und/ oder Geräteparameter an die Sauggutsammelstation übermittelt, und wobei ein Betrieb des Gebläses der Sauggutsammelstation automatisch in Abhängigkeit von dem Anwesenheitsparameter und/ oder dem Geräteparameter gesteuert wird. Bei dieser Variante muss die Sauggutsammelstation selbst keine Detektionseinrichtung zur Detektion eines Anwesenheitsparameters und/ oder Geräteparameters aufweisen. Vielmehr erhält die Sauggutsammelstation Informationen über derartige Parameter von einem Saugreinigungsgerät oder einem sonstigen externen Gerät, beispielsweise einem Überwachungsroboter, einem mobilen Endgerät eines Nutzers oder ähnlichem. Die Kommunikation zwischen den korrespondierenden Kommunikationseinrichtungen der Sauggutsammelstation und des Saugreinigungsgerätes bzw. des externen Gerätes erfolgt bevorzugt innerhalb eines drahtlosen Kommunikationsnetzwerkes, beispielsweise eines WLAN-Netzwerkes. Besonders bevorzugt können mehrere Saugreinigungsgeräte oder externe Geräte beispielsweise Anwesenheitsparameter an einen zentralen Speicher des Kommunikationsnetzwerkes senden, so dass eine Steuer- und Auswerteeinrichtung der Sauggutsammelstation stets Kenntnis darüber erlangen kann, ob sich beispielsweise ein Mensch in der Nähe der Sauggutsammelstation befindet und von Regenerationsgeräuschen gestört werden könnte. Daraus kann die Steuer- und Auswerteeinrichtung dann den charakteristischen Umgebungsstörungsparameter ermitteln.

In Bezug auf die Detektion eines Geräteparameters eines Saugreinigungsgerätes kann vorgesehen sein, dass die Sauggutsammelstation zunächst detektiert, wenn bzw. ob ein Saugreinigungsgerät mit der Schnittstelle der Sauggutsammelstation verbunden ist. Die Sauggutsammelstation prüft darauf hin, ob kürzlich, insbesondere seit einer letzten Regeneration des Saugreinigungsgerätes, eine Saugreinigung mit dem Saugreinigungsgerät stattgefunden hat. Dazu kann die Sauggutsammelstation bevorzugt drahtlos mit dem Saugreinigungsgerät, insbesondere auch dessen Akkumulator, kommunizieren. Das Saugreinigungsgerät bzw. der Akkumulator sendet daraufhin beispielsweise eine Information an die Sauggutsammelstation mit dem Inhalt, dass seit einer letzten Abreinigung ein Saugbetrieb des Saugreinigungsgerätes stattgefunden hat. Diese Information wird mit dem Zeitpunkt der letzten bekannten Abreinigung des Saugreinigungsgerätes verglichen. Liegt der erneute Saugbetrieb nach diesem Datum, ermittelt die Steuer- und Auswerteeinrichtung der Sauggutsammelstation, dass seit der letzten Regeneration der Filterkammer gesaugt worden ist und sich somit vermutlich Sauggut innerhalb der Filterkammer befindet. Sodann kann die Steuer- und Auswerteeinrichtung der Sauggutsammelstation eine Regeneration der Filterkammer initiieren, nämlich insbesondere durch Betrieb des Elektromotors des Gebläses. Die Steuer- und Auswerteeinrichtung der Sauggutsammelstation kann des Weiteren zusätzliche Informationen verwenden, um eine Entscheidung über den Betrieb des Elektromotors zu treffen. Der Geräteparameter kann einen Status des Reinigungsgerätes betreffen, der beispielsweise von einem Schmutzsensor innerhalb des Saugreinigungsgerätes oder einem Filterfüllstandsensor des Saugreinigungsgerätes detektiert wird. Der Schmutzsensor erkennt während der Nutzung, dass Staub und/ oder Schmutz eingesaugt wird, sowie gegebenenfalls die Menge und/oder Art des eingesaugten Sauggutes. Diese Information wird in dem Saugreinigungsgerät gespeichert und zum Zeitpunkt des Verbindens des Saugreinigungsgerätes mit der Sauggutsammelstation drahtlos oder drahtgebunden an die Steuer- und Auswerteeinrichtung der Sauggutsammelstation übertragen. Alternativ kann das Saugreinigungsgerät die Informationen auch kontinuierlich oder in bestimmten Abständen speichern und/oder an die Sauggutsammelstation übermitteln. Die Steuer- und Auswerteeinrichtung der Sauggutsammelstation kann dann anhand eines Vergleiches mit Schwellwerten ermitteln, ob derzeit eine Notwendigkeit zur sofortigen Regeneration der Filterkammer des Saugreinigungsgerätes besteht, oder ob die Regeneration gegebenenfalls, insbesondere wenn ein Anwesenheitsparameter darauf hinweist, dass sich ein Mensch und/oder ein Tier innerhalb der Umgebung der Sauggutsammelstation durch die Regeneration gestört fühlen könnte, zeitlich in die Zukunft verschoben werden kann. Nach erfolgter Abreinigung der Filterkammer kann der Status des Saugreinigungsgerätes wieder auf "Regeneriert" zurückgesetzt werden. Der Füllstand der Filterkammer des Saugreinigungsgerätes kann beispielsweise über einen Differenzdrucksensor oder einen anderen Füllstandsensor ermittelt werden. Der Füllstandsensor kann beispielsweise eine kumulative Aufnahme von Sauggut detektieren, eine Lichtschranke aufweisen, ein optischer oder akustischer Sensor sein, ein Influenzsensor zur Detektion einer Partikelgeschwindigkeit oder ähnliches.

Um zu überprüfen, ob das Saugreinigungsgerät nach einer zuletzt durchgeführten Regeneration erneut Sauggut aufgenommen hat, kann eine Betriebshistorie des Saugreinigungsgerätes ausgewertet werden. Dabei können die Ein/ Aus-Zustände des Saugreinigungsgerätes sowie auch eine Dauer eines Saugbetriebes und/oder eine Saugleistung des Gebläses ausgewertet werden. Sofern erkannt wird, dass nach der letzten Regeneration ein Saugbetrieb mittels des Saugreinigungsgerätes durchgeführt wurde, kann die Steuer- und Auswerteeinrichtung der Sauggutsammelstation die Filterkammer des Saugreinigungsgerätes bei Vorliegen eines geringen Umgebungsstörungsparameters regenerieren. Die Reinigungshistorie kann indirekt über eine Entladung des Akkumulators des Saugreinigungsgerätes ermittelt werden. Dabei können ein oder mehrere Parameter des Akkumulators herangezogen und an die Steuer- und Auswerteeinrichtung der Sauggutsammelstation übertragen werden. Die Übertragung dieses Geräteparameters kann entweder erst bei Andocken des Saugeinigungsgerätes an die Schnittstelle der Sauggutsammelstation erfolgen, oder auch bereits zuvor mittels drahtloser Kommunikation über die korrespondierenden Kommunikationseinrichtungen von Sauggutsammelstation und Saugreinigungsgerät, gegebenenfalls unter Zwischenschaltung eines Access Points eines drahtlosen Kommunikationsnetzwerkes, insbesondere Smart Home-Netzwerkes. Die Steuer- und Auswerteeinrichtung der Sauggutsammelstation kann die übermittelten Geräteparameter mit insbesondere in der Sauggutsammelstation gespeicherten Referenzwerten vergleichen. Sofern sich Abweichungen ergeben, kann die Steuer- und Auswerteeinrichtung entscheiden, ob ein Regenerationsbetrieb durchgeführt werden soll. Insbesondere kann die Steuer- und Auswerteeinrichtung einen Ladezustand des Akkumulators des Saugreinigungsgerätes ermitteln. Hierzu verfügt das Saugreinigungsgerät beispielsweise über einen Coulomb-Zähler oder führt einen Ladezustandsvergleich durch. Der Ladestatus wird dann an die Steuer- und Auswerteeinrichtung der Sauggutsammelstation übermittelt. Des Weiteren kann das Saugreinigungsgerät einen Temperatursensor aufweisen, welcher eine Temperatur des Akkumulators misst. Sofern die Temperatur erhöht ist, kann beispielsweise auf eine Entladung des Akkumulators bei Ausführen eines Saugbetriebs geschlossen werden. Die Steuer- und Auswerteeinrichtung der Sauggutsammelstation kann dann nach Erhalt dieses Geräteparameters entscheiden, ob die Filterkammer ausgesaugt werden soll. Des Weiteren kann das Saugreinigungsgerät die Spannung des Akkumulators ermitteln und mit Referenzwerten vergleichen. Insbesondere kann eine Akkumulatorspannung vor einem Saugbetrieb mit einer Akkumulatorspannung nach einem Saugbetrieb verglichen werden, um zu ermitteln, ob ein Saugbetrieb ausgeführt wurde. Dieser Geräteparameter kann entweder durch eine eigene Detektionseinrichtung des Saugreinigungsgerätes ermittelt werden, oder durch eine Detektionseinrichtung der Sauggutsammelstation, welche beispielsweise eine Akkumulatorspannung an den Lade-/Entladekontakten des Saugreinigungsgerätes misst, wenn das Saugreinigungsgerät mit der Schnittstelle der Sauggutsammelstation verbunden ist. In diesem Fall muss eine drahtlose Kommunikation zwischen dem Saugreinigungsgerät und der Sauggutsammelstation nicht mehr erfolgen. Sofern ein System verwendet wird, das ein Saugreinigungsgerät mit mehreren Akkumulatoren beinhaltet, besteht die Möglichkeit, dass eine erste Reinigung mit einem ersten Akkumulator durchgeführt wurde, und anschließend unter Nutzung eines zweiten Akkumulator nachgereinigt wurde. In diesem Fall kann nach Abschluss des Reinigungsbetriebs des Saugreinigungsgerätes ermittelt werden, um welchen Betrag die Ladezustände aller Akkumulatoren insgesamt verringert wurden. Dazu können beispielsweise das Saugreinigungsgerät und alle weiteren Akkumulatoren des Systems mit der Sauggutsammelstation verbunden werden. Sofern die Summe der Ladezustände der Akkumulatoren geringer ist als ein definierter Schwellwert, kann die Steuer- und Auswerteeinrichtung der Sauggutsammelstation entscheiden, ob das betreffende Saugreinigungsgerät zuvor in Betrieb war und dessen Filterkammer nun abzureinigen ist. Neben den Ladezuständen der Akkumulatoren können zusätzlich beispielsweise auch deren zugehörige Akkumulator-IDs an die Sauggutsammelstation übermittelt werden. Dies ist insbesondere vorteilhaft, wenn das System mehrere Akkumulatoren für ein Saugreinigungsgerät beinhaltet. Optional kann auch ein Zeitstempel mitübertragen werden, um eine zeitliche Zuordnung der Geräteparameter zu ermöglichen.

Des Weiteren kann der Betrieb des Elektromotors der Sauggutsammelstation auch final durch einen Nutzer freigegeben werden, beispielsweise über ein externes Endgerät, welches mit der Sauggutsammelstation, gegebenenfalls über einen Access Point eines Kommunikationsnetzwerkes, in Kommunikationsverbindung steht. Der Nutzer verfügt zu diesem Zweck beispielsweise über ein mobiles Endgerät wie ein Mobiltelefon oder einen Tablet-Computer, auf welchem eine Applikation zur Fernsteuerung der Sauggutsammelstation installiert ist. Diese Applikation kann dem Nutzer beispielsweise aktuelle Geräteparameter des Saugreinigungsgerätes und/oder der Sauggutsammelstation anzeigen. Hierzu gehören Informationen darüber, ob aktuell ein Saugreinigungsgerät mit der Schnittstelle der Sauggutsammelstation verbunden ist, ob die Sauggutsammelstation an ein elektrisches Hausnetz angeschlossen ist, ob die Steuer- und Auswerteeinrichtung der Sauggutsammelstation aktuell eine Regeneration einer Filterkammer eines Saugreinigungsgerätes empfiehlt, welche Reinigungsparameter, zum Beispiel Saugleistung des Gebläses der Sauggutsammelstation oder Regenerationsdauer, empfehlenswert sind, wann letztmalig eine Regeneration der Filterkammer erfolgte, welchen Füllstand die Filterkammer des Saugreinigungsgerätes und/oder der Sauggutsammelbehälter der Sauggutsammelstation aufweist. Der Nutzer kann in der Applikation dann beispielsweise einer Regenerationsempfehlung der Steuer- und Auswerteeinrichtung der Sauggutsammelstation folgen. Des Weiteren ist es möglich, dass der Nutzer ein zeitliches Fenster angibt, in welchem die Regeneration gewünscht ist. Der Nutzer kann einen Timer für den Betrieb des Elektromotors der Sauggutsammelstation starten, so dass nach Ablauf der eingestellten Zeitdauer ein Regenerationsvorgang gestartet wird. Der Nutzer kann des Weiteren einen Kalender in der Sauggutsammelstation oder auch einem damit in Kommunikationsverbindung stehenden externen Endgerät, insbesondere einer Datenspeichereinrichtung, anlegen, welcher Nachtruhezeiten, Mittagsruhezeiten, Ferienzeiten, Abwesenheitszeiten des Nutzers oder ähnliches enthält. Ein Betrieb des Elektromotors der Sauggutsammelstation wird dann aufgeschoben, wenn die Steuer- und Auswerteeinrichtung der Sauggutsammelstation erkennt, dass derzeit beispielsweise eine Ruhezeit vorliegt. Erst nach Ablauf der Ruhezeit wird der Elektromotor zum Betrieb des Gebläses der Sauggutsammelstation angeschaltet.

Insgesamt kann das System aus Sauggutsammelstation und Saugreinigungsgerät derart konfiguriert sein, dass der Umfang des automatischen Betriebs des Elektromotors der Sauggutsammelstation in Abhängigkeit von einem oder mehreren Anwesenheitsparametern und/oder einem oder mehreren Geräteparametern variierbar ist. Entweder kann die Steuer- und Auswerteeinrichtung der Sauggutsammelstation anhand der selbst detektierten oder von externen Geräten, insbesondere Saugreinigungsgeräten, ermittelten Parameter bestimmen, ob und wann die Regeneration der Filterkammer gestartet wird. Des Weiteren kann zur finalen Freigabe des Betriebs des Gebläses der Sauggutsammelstation eine manuelle Freigabe durch einen Nutzer vorgesehen sein, was insbesondere im Rahmen einer Fernsteuerung der Regeneration erfolgen kann.

### Kurze Beschreibung der Zeichnungen

Im Folgenden wird die Erfindung anhand von Ausführungsbeispielen näher erläutert. Es zeigen:
- Fig. 1: ein System mit einer Sauggutsammelstation und einem Saugreinigungsgerät gemäß einer beispielhaften Ausführung,
- Fig. 2: ein System mit einer Sauggutsammelstation und einem Saugreinigungsgerät gemäß einer weiteren beispielhaften Ausführung.

### Beschreibung der Ausführungsformen

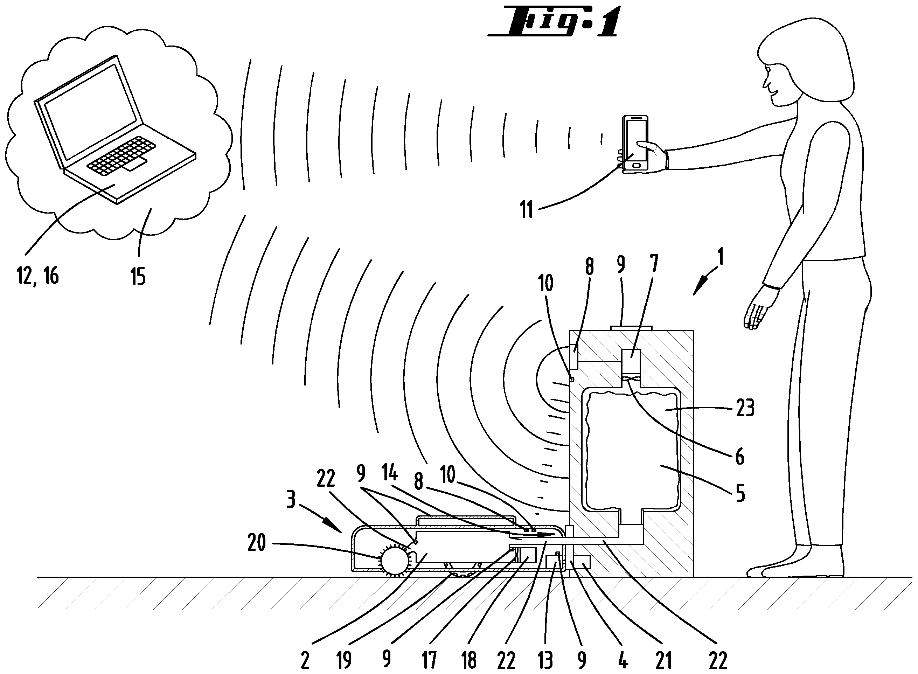

Figur 1 zeigt beispielhaft eine mögliche Ausführungsform eines erfindungsgemäßen Systems aus einer beispielhaft dargestellten Sauggutsammelstation 1 und einem beispielhaft dargestellten Saugreinigungsgerät 3. Die Sauggutsammelstation 1 dient hier als Andockstation für das Saugreinigungsgerät 3, welches hier beispielhaft als sich selbsttätig fortbewegender Roboter ausgebildet ist. Allerdings kann die Erfindung auch ebenso Bedeutung haben für ein System, welches eine Sauggutsammelstation 1 und ein von einem Nutzer handgeführtes Saugreinigungsgerät 3 aufweist, das von dem Nutzer manuell mit der Sauggutsammelstation 1 verbunden wird.

Von außen betrachtet weist die Sauggutsammelstation 1 ein Stationsgehäuse mit einer Schnittstelle 4 zur Kontaktierung des Saugreinigungsgerätes 3 auf. Die Sauggutsammelstation 1 weist einen Sauggutsammelbehälter 5 zur Übernahme von Sauggut von dem Saugreinigungsgerät 3, ein Gebläse 6 und einen Elektromotor 7 auf, welcher zum Antrieb des Gebläses 6 dient. Im Bereich der Schnittstelle 4 weist die Sauggutsammelstation 1 einen Strömungskanal 22 auf, welcher die Schnittstelle 4 mit dem Sauggutsammelbehälter 5 verbindet. Bei Betrieb des Elektromotors 7 und damit auch des Gebläses 6 kann Sauggut via der Schnittstelle 4 und durch den Strömungskanal 22 in den Sauggutsammelbehälter 5 strömen, wobei das Sauggut dort durch ein Filterelement 23 zurückgehalten wird, beispielsweise einen Filterbeutel, so dass ausschließlich gereinigte Luft weiter zu dem Gebläse 6 bzw. dem Elektromotor 7 strömt. Die Sauggutsammelstation 1 verfügt des Weiteren über eine Ladeeinrichtung 21 zum Aufladen eines Akkumulators 13 des Saugreinigungsgerätes 3. Des Weiteren weist die Sauggutsammelstation 1 eine Kommunikationseinrichtung 10, nämlich hier beispielsweise ein WLAN-Modul zur drahtlosen Kommunikation mit dem Saugreinigungsgerät 3 und einem Kommunikationsnetzwerk 15, auf, sowie eine Steuer- und Auswerteeinrichtung 8. Zudem verfügt die Sauggutsammelstation 1 über eine Detektionseinrichtung 9 zur Detektion der Anwesenheit eines Nutzers in der Umgebung der Sauggutsammelstation 1. Diese Detektionseinrichtung 9 ist hier beispielsweise eine um 360 Grad rotierbare Lasertriangulationseinrichtung, welche Abstände zu Hindernissen bzw. Objekten in der Umgebung der Sauggutsammelstation 1 messen kann. Sofern wie dargestellt ein Nutzer durch die so gebildete Lichtschranke hindurchtritt, detektiert die Detektionseinrichtung 9 in kurzen zeitlichen Abständen variierende Entfernungen zu Hindernissen, woraufhin die Steuer- und Auswerteeinrichtung 8 der Sauggutsammelstation 1 dann auf ein bewegtes Hindernis, wie hier beispielsweise einen Nutzer, schließen kann.

Das Kommunikationsnetzwerk 15 weist eine Mehrzahl von Teilnehmern auf, hierzu gehören gemäß der beispielhaften Ausführungsform zum einen die Sauggutsammelstation 1, bzw. deren Kommunikationseinrichtung 10, ein mobiles Endgerät 11 des Nutzers, welches dieser hier mit sich führt, sowie ein externes Gerät 12, welches gleichzeitig den Access Point 16 für das Kommunikationsnetzwerk 15 bildet. Das Kommunikationsnetzwerk 15 ist beispielsweise ein sogenanntes Smart Home-Netzwerk, in welches noch weitere, hier nicht dargestellte, Teilnehmer eingebunden sein können, beispielsweise eine Heizungssteuerung, Lichtsteuerung, Raumüberwachung, ein automatisches Türverschlusssystem oder ähnliches. Die Teilnehmer des Kommunikationsnetzwerkes 15 können hier entweder direkt miteinander kommunizieren, oder über den Access Point 16 des Kommunikationsnetzwerkes 15.

Das Saugreinigungsgerät 3 weist eine Filterkammer 2, ein Gerätegebläse 17 und einen Gerätemotor 18 auf. Der Gerätemotor 18 dient zum Antrieb des Gerätegebläses 17, um während eines üblichen Saugbetriebs des Saugreinigungsgerätes 3 Sauggut von einer zu reinigenden Fläche in die Filterkammer 2 saugen zu können. In der Filterkammer 2 wird das Sauggut gesammelt, so dass ausschließlich gereinigte Luft weiter zu dem Gerätegebläse 17 bzw. dem Gerätemotor 18 strömen kann. Das Saugreinigungsgerät 3 verfügt des Weiteren über Räder 19 zur Fortbewegung des Saugreinigungsgerätes 3 innerhalb der Umgebung sowie über ein Reinigungselement 20, beispielsweise eine angetriebene Borstenwalze, zur Einwirkung auf eine zu reinigende Fläche. Im Bereich des Reinigungselementes 20 mündet des Weiteren ein Strömungskanal 22, durch welchen das Sauggut von der zu reinigenden Fläche in die Filterkammer 2 gefördert werden kann. Der Akkumulator 13 des Saugreinigungsgerätes 3 dient zur Energieversorgung des Gerätemotors 18 sowie gegebenenfalls weiterer elektronischer oder elektrischer Einrichtungen des Saugreinigungsgerätes 3. Zudem verfügt das Saugreinigungsgerät 3 über eine Steuer- und Auswerteeinrichtung 8 und eine Kommunikationseinrichtung 10, welche hier beispielsweise ebenfalls als WLAN-Modul ausgebildet ist und somit mit entweder dem Access Point 16 des Kommunikationsnetzwerkes 15 oder direkt mit der Kommunikationseinrichtung 10 der Sauggutsammelstation 1 korrespondieren kann. Das Saugreinigungsgerät 3 macht des Weiteren Gebrauch von einer Navigationseinrichtung, welche hier nicht näher dargestellt ist. Diese dient der Orientierung und Selbstlokalisierung des Saugreinigungsgerätes 3 innerhalb der Umgebung, um ein selbsttätiges Verfahren des Saugreinigungsgerätes 3 möglich zu machen.

Die Steuer- und Auswerteeinrichtung 8 der Sauggutsammelstation 1 ist hier so ausgebildet, dass diese den Betrieb des Elektromotors 7 des Gebläses 6 so steuert, dass ein Nutzer, welcher sich in der Umgebung der Sauggutsammelstation 1 aufhält, möglichst gar nicht oder nur so gering wie möglich gestört wird. Gleiches kann anstatt für menschliche Personen, auch für Tiere gelten, die in der Nähe der Sauggutsammelstation 1 beispielsweise ihren Schlafplatz haben.

Gemäß der Erfindung führt das Saugreinigungsgerät 3 beispielsweise zunächst einen üblichen Saugvorgang durch, wobei das Saugreinigungsgerät 3 selbsttätig über eine zu reinigende Fläche verfährt und Sauggut in seine Filterkammer 2 aufnimmt. Der zum Antrieb des Gebläses 6 verwendete Elektromotor 7 verbraucht dabei elektrische Energie, die dem Akkumulator 13 entnommen wird. Nach fortgeführtem Saugreinigungsbetrieb kann ein Servicebedarf an dem Saugreinigungsgerät 3 bestehen, nämlich zum Beispiel die Notwendigkeit, die Filterkammer 2 zu entleeren oder den Akkumulator 13 aufzuladen. Zum Entleeren der Filterkammer 2 fährt das Saugreinigungsgerät 3 an die Sauggutsammelstation 1 und dockt dort mit einem Geräteteilbereich 14 an der Schnittstelle 4 der Sauggutsammelstation 1 an. Dabei werden einerseits die Strömungskanäle 22 des Saugreinigungsgerätes 3 und der Sauggutsammelstation 1 miteinander verbunden, und andererseits der Akkumulator 13 mit der Ladeeinrichtung 21 der Sauggutsammelstation 1. Die Schnittstelle 4 kann Sensoren, beispielsweise Kontaktschalter, aufweisen, die ein Andocken des Saugreinigungsgerätes 3 an die Steuer- und Auswerteeinrichtung 8 der Sauggutsammelstation 1 melden. Sobald die Steuer- und Auswerteeinrichtung 8 Kenntnis darüber hat, dass ein Saugreinigungsgerät 3 mit der Schnittstelle 4 verbunden ist, ermittelt die Steuer- und Auswerteeinrichtung 8, ob ein Betrieb des Gebläses 6 ohne die Störung eines Menschen oder Tieres in der Umgebung möglich ist. Die Detektionseinrichtung 9 kann zur Detektion von Bewegungen innerhalb der Umgebung bereits regelmäßig zuvor tätig gewesen sein, oder erst dann von der Steuer- und Auswerteeinrichtung 8 der Sauggutsammelstation 1 aktiviert werden, wenn das Andocken des Saugreinigungsgerätes 3 festgestellt wird. Neben der optischen Detektionseinrichtung 9 (oder auch alternativ dazu) kann die Sauggutsammelstation 1 weitere Einrichtungen verwenden, um auf die Anwesenheit eines Nutzers schließen zu können. Zum einen kann die Kommunikationseinrichtung 10 detektieren, ob derzeit ein elektronisches Gerät des Nutzers betrieben wird, beispielsweise das mobile Endgerät 11 des Nutzers. Das mobile Endgerät 11 weist selbst ein Funkmodul auf, welches Signale in die Umgebung aussendet. Sofern festgestellt wird, dass sich das mobile Endgerät 11 in der Umgebung der Sauggutsammelstation 1 befindet, kann die Steuer- und Auswerteeinrichtung 8 der Sauggutsammelstation 1 beispielsweise darauf schließen, dass der Nutzer zu Hause ist. Eine Anwesenheit eines Nutzers kann des Weiteren auch mit andersartigen Detektionseinrichtung 9 detektiert werden, die hier nicht weiter dargestellt sind. Beispielsweise kann es sich bei der Detektionseinrichtung 9 der Sauggutsammelstation 1 auch um eine Bilderfassungseinrichtung, beispielsweise eine Kamera, einem CMOS-Chip, einem CCD-Chip oder ähnliches handeln. Die Detektionseinrichtung 9 kann auch einen Ultraschallsensor aufweisen, ein Mikrofon zur Detektion von Umgebungsgeräuschen oder ähnliches. Beispielsweise ist es möglich, dass der Nutzer ein anderes elektrisches oder elektronisches Gerät 12 in der Umgebung betreibt, welches anzeigt, dass der Nutzer dementsprechend zu Hause sein muss. Bei dem weiteren Gerät 12 kann es sich beispielsweise um ein anderes Haushaltsgerät, den Access Point 16, welcher aktuell eine Aktivität im Internet zeigt, eine Musikanlage oder ähnliches handeln. Des Weiteren kann die Steuer- und Auswerteeinrichtung 8 über die Kommunikationseinrichtung 10 der Sauggutsammelstation 1 auch auf einen Server des Hauskommunikationsnetzwerkes 15, beispielsweise hier das als PC ausgebildete Gerät 12, zugreifen, in welchem ein Aktivitätenkalender des Nutzers gespeichert ist. Ebenso kann sich dieser Kalender auch auf dem mobilen Endgerät 11 des Nutzers befinden, auf welchen die Steuer- und Auswerteeinrichtung 8 der Sauggutsammelstation 1 direkt oder indirekt über den Access Point 16 zugreifen kann. Der Kalender kann Anwesenheitszeiten und Abwesenheitszeiten des Nutzers beinhalten oder sogar tiefergehende Details wie beispielsweise eine Nachtruhe oder Mittagsruhe, welche der Nutzer üblicherweise einhält. In Abhängigkeit von den gesammelten Informationen kann die Steuer- und Auswerteeinrichtung 8 daraufhin einen Umgebungsstörungsparameter berechnen und entscheiden, ob der Elektromotor 7 und das Gebläse 6 der Sauggutsammelstation 1 betrieben werden dürfen. Sofern beispielsweise festgestellt wird, dass aktuell eine Ruhezeit des Nutzers einzuhalten ist, ist der Umgebungsstörungsparameter hoch, beispielsweise "Stufe 10 von 10" oder "100 Prozent" und der Elektromotor 7 wird nicht durch die Steuer- und Auswerteeinrichtung 8 aktiviert. Beispielsweise können Szenarien mit definierten Anwesenheitsparametern gespeichert sein, die definierten Umgebungsstörungsparametern zugeordnet sind. Die Steuer- und Auswerteeinrichtung 8 ermittelt, welche Anwesenheitsparameter vorliegen und vergleicht diese mit den gespeicherten Szenarien, um den charakteristischen Umgebungsstörungsparameter dafür zu ermitteln. Dies kann auch die Berechnung einer Wahrscheinlichkeit dafür beinhalten, dass die Umgebung bei den detektieren Anwesenheitsparametern voraussichtlich gestört wird. Die Steuer- und Auswerteeinrichtung 8 kann eine Zeitsteuerung anwenden, die den Elektromotor 7 des Gebläses 6 nach Ablauf der Ruhezeit automatisch startet. Wenn Geräusche des Nutzers oder beispielsweise die Aktivität einer Musikanlage in der Umgebung detektiert werden, kann die Steuer- und Auswerteeinrichtung 8 den Betrieb des Elektromotors 7 ebenfalls unterlassen oder eine sehr geringe Leistungsstufe für das Gebläse 6 vorsehen, um so wenig störende Geräusche zu verursachen wie möglich. Sofern jedoch festgestellt wird, dass der Nutzer zwar anwesend ist, aber andere Geräusche emittierende Geräte aktuell betrieben werden, beispielsweise eine Küchenmaschine oder ein anderes Bodenbearbeitungsgerät, kann davon ausgegangen werden, dass der Nutzer sich durch den Betrieb der Sauggutsammelstation 1 nicht gestört fühlen wird. In diesem Fall kann das Gebläse 6 der Sauggutsammelstation 1 dann angeschaltet werden, um die Filterkammer 2 des Saugreinigungsgerätes 3 zu entleeren.

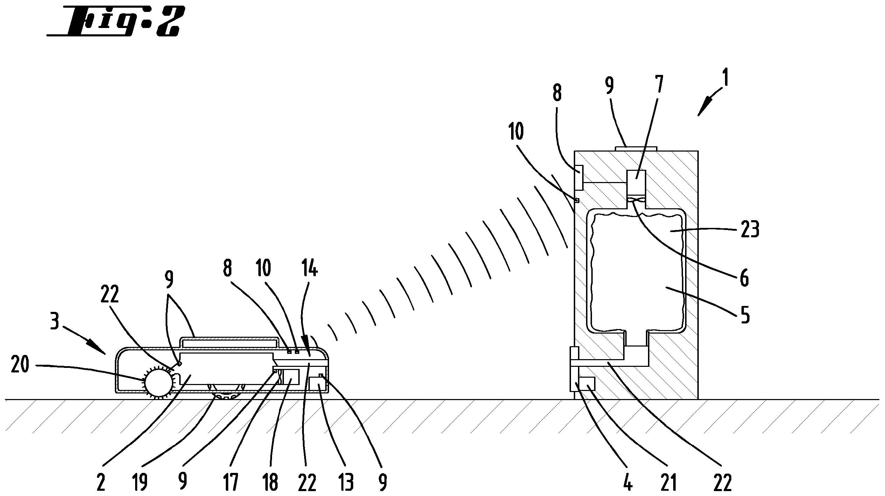

Figur 2 zeigt ein anderes mögliches Ausführungsbeispiel, welches - wie auch Figur 1 - nur beispielsweise zu verstehen ist, da eine Vielzahl weiterer Möglichkeiten besteht, die Erfindung auszuführen. Insbesondere ist auch eine Kombination der Ausführungen gemäß Figur 1 und Figur 2 möglich. Figur 2 zeigt ein Saugreinigungsgerät 3 und eine Sauggutsammelstation 1 in einem Zustand, bei welchem diese noch nicht über die Schnittstelle 4 der Sauggutsammelstation 1 miteinander verbunden sind. Das Saugreinigungsgerät 3 verfährt noch in der Umgebung und führt eine Saugreinigungstätigkeit aus. Dabei wird in üblicher Art und Weise Sauggut in die Filterkammer 2 aufgenommen. Das Saugreinigungsgerät 3 weist eine Detektionseinrichtung 9 auf, welche zwei Drucksensoren umfasst, von welchen ein erster Drucksensor in dem Strömungskanal 22 vor der Filterkammer 2 angeordnet ist, und ein zweiter Drucksensor entsprechend hinter der Filterkammer 2. Durch die Detektionseinrichtung 9 kann somit ein Druckabfall über der Filterkammer 2 ermittelt werden, welcher mit zunehmender Sauggutbelegung der Filterkammer 2 steigt. Das Saugreinigungsgerät 3 verfügt über eine Steuer- und Auswerteeinrichtung 8 sowie eine Kommunikationseinrichtung 10, mittels welcher das Detektionsergebnis an die Steuer- und Auswerteeinrichtung 8 der Sauggutsammelstation 1 gemeldet werden kann, um einen Regenerationsbedarf der Filterkammer 2 anzuzeigen. Des Weiteren weist das Saugreinigungsgerät 3 eine zusätzliche, dem Akkumulator 13 zugeordnete Detektionseinrichtung 9 auf, welche eine Akkumulatorspannung misst, die sich im Verlauf eines Betriebs des Elektromotors 7 des Saugreinigungsgerätes 3 verringert. Gemäß dieser Ausführung ermittelt das Saugreinigungsgerät 3 mittels seiner Steuer- und Auswerteeinrichtung 8 sowie Detektionseinrichtungen 9 selbst einen oder mehrere Geräteparameter des Saugreinigungsgerätes 3. Die Geräteparameter werden mittels der Kommunikationseinrichtung 10 entweder direkt an die Sauggutsammelstation 1 übermittelt, oder auch indirekt - wie zuvor beispielsweise in Figur 1 dargestellt - über einen Access Point 16 eines Kommunikationsnetzwerkes 15, in welches sowohl das Saugreinigungsgerät 3, als auch die Sauggutsammelstation 1 eingebunden sind. Die Steuer- und Auswerteeinrichtung 8 der Sauggutsammelstation 1 entscheidet dann, ob aufgrund der von dem Saugreinigungsgerät 3 übermittelten Geräteparameter tatsächlich eine Abreinigung der Filterkammer 2 erforderlich ist. Dabei wird über eine Notwendigkeit des Regenerationsvorgangs entschieden, jedoch auch über eine mögliche Nutzerstörung. Insofern wird - wie bereits in Bezug auf Figur 1 beschrieben - ein Umgebungsstörungsparameter ermittelt. Sofern anhand der reduzierten Akkumulatorspannung des Akkumulators 13 und/ oder anhand des Füllstands der Filterkammer 2 ermittelt wird, dass eine umgehende Regeneration der Filterkammer 2 des Saugreinigungsgerätes 3 erforderlich ist, prüft die Steuer- und Auswerteeinrichtung 8 der Sauggutsammelstation 1, ob der ermittelte Umgebungsstörungsparameter geringer ist als ein definierter Referenzparameter. Neben der oder alternativ zu der Detektionseinrichtung 9, welche auf der Oberseite des Saugreinigungsgerätes 3 angeordnet ist und die Umgebung in einem 360 Grad-Winkel nach beweglichen Hindernissen abscannt, kann das Saugreinigungsgerät 3 auch andere Detektionseinrichtungen 9 aufweisen, die einen Anwesenheitsparameter ermitteln können, beispielsweise eine Bilderfassungseinrichtung, einen Ultraschallsensor, ein Mikrofon, einen Bewegungssensor, ein Funkmodul zur Detektion eines mobilen Endgerätes 11 des Nutzers in der Umgebung oder ähnliches. Sofern die Sauggutsammelstation 1 dann anhand des Umgebungsstörungsparameters feststellt oder mitgeteilt bekommt, dass der Nutzer höchstwahrscheinlich nicht anwesend ist, oder sich höchstwahrscheinlich nicht gestört fühlen wird, erwartet die Sauggutsammelstation 1 das Andocken des Saugreinigungsgerätes 3 an der Schnittstelle 4 der Sauggutsammelstation 1 und steuert den Betrieb des Gebläses 6 der Sauggutsammelstation 1 für eine Regeneration der Filterkammer 2 des Saugreinigungsgerätes 3.

### Liste der Bezugszeichen

- 1: Sauggutsammelstation
- 2: Filterkammer
- 3: Saugreinigungsgerätes
- 4: Schnittstelle
- 5: Sauggutsammelbehälter
- 6: Gebläse
- 7: Elektromotor
- 8: Steuer- und Auswerteeinrichtung
- 9: Detektionseinrichtung
- 10: Kommunikationseinrichtung
- 11: Gerät
- 12: Gerät
- 13: Akkumulator
- 14: Geräteteilbereich
- 15: Kommunikationsnetzwerk
- 16: Access Point
- 17: Gerätegebläse
- 18: Gerätemotor
- 19: Rad
- 20: Reinigungselement
- 21: Ladeeinrichtung
- 22: Strömungskanal
- 23: Filterelement

## Patentansprüche

1. Sauggutsammelstation (1) zum Regenerieren einer Filterkammer (2) eines Saugreinigungsgerätes (3), wobei die Sauggutsammelstation (1) eine Schnittstelle (4) zum Anschließen des Saugreinigungsgerätes (3), einen Sauggutsammelbehälter (5), ein Gebläse (6) zum Erzeugen eines Unterdrucks in dem Sauggutsammelbehälter (5) und einen Elektromotor (7) zum Antrieb des Gebläses (6) aufweist, so dass in der Filterkammer (2) des Saugreinigungsgerätes (3) enthaltenes Sauggut mittels des Gebläses (6) in den Sauggutsammelbehälter (5) förderbar ist, **dadurch gekennzeichnet, dass** die Sauggutsammelstation (1) eine Steuer- und Auswerteeinrichtung (8) aufweist, welche eingerichtet ist, einen Umgebungsstörungsparameter zu berechnen, der einen Grad einer potenziellen Störung der Umgebung durch einen Betrieb des Gebläses (6) der Sauggutsammelstation (1) angibt, und den Betrieb des Elektromotors (7) automatisch in Abhängigkeit von dem Umgebungsstörungsparameter und einem Geräteparameter des Saugreinigungsgerätes (3) zu steuern, wobei die Sauggutsammelstation (1) des Weiteren eine Detektionseinrichtung (9) zur Detektion eines Anwesenheitsparameters in der Umgebung der Sauggutsammelstation (1) und/oder eines Geräteparameters und/ oder eine Kommunikationseinrichtung (10) zum Empfang einer Information über den Anwesenheitsparameter und/oder Geräteparameter aufweist.

2. Sauggutsammelstation (1) nach Anspruch 1, **dadurch gekennzeichnet, dass** die Detektionseinrichtung (9) eine Bilderfassungseinrichtung, einen Ultraschallsensor, ein Mikrofon, ein Funkmodul und/oder einen Bewegungssensor aufweist.

3. Sauggutsammelstation (1) nach Anspruch 1 oder 2, **dadurch gekennzeichnet, dass** der Anwesenheitsparameter eine Anwesenheit eines Menschen, eines Tieres und/ oder eines in der Umgebung betriebenen Gerätes (11,12) ist.

4. Sauggutsammelstation (1) nach einem der vorhergehenden Ansprüche, **dadurch gekennzeichnet, dass** der Geräteparameter ein Status des Saugreinigungsgerätes (3) ist, nämlich ein Füllstand der Filterkammer (2), ein Ladestatus eines Akkumulators (13), eine Reinigungshistorie und/oder ein Verschmutzungszustand des Saugreinigungsgerätes (3).

5. System aus einer gemäß einem der Ansprüche 1 bis 4 ausgebildeten Sauggutsammelstation (1) und einem Saugreinigungsgerät (3), wobei das Saugreinigungsgerät (3) eine Filterkammer (2) zum Sammeln von Sauggut während eines Saugreinigungsbetriebes und zumindest einen korrespondierend zu der Schnittstelle (4) der Sauggutsammelstation (1) ausgebildeten Geräteteilbereich (14) aufweist, mittels welchem das Saugreinigungsgerät (3) zur Regeneration der Filterkammer (2) mit der Sauggutsammelstation (1) verbindbar ist.

6. System nach Anspruch 5, **dadurch gekennzeichnet, dass** die Sauggutsammelstation (1) und das Saugreinigungsgerät (3) zueinander korrespondierende Kommunikationseinrichtungen (10) aufweisen.

7. System nach Anspruch 5 oder 6, **dadurch gekennzeichnet, dass** das System des Weiteren ein drahtloses Kommunikationsnetzwerk (15) mit einem Access Point (16) aufweist, wobei die Kommunikationseinrichtungen (10) der Sauggutsammelstation (1) und des Saugreinigungsgerätes (3) ausgebildet sind, mit dem Access Point (16) zu kommunizieren.

8. System nach Anspruch 7, **gekennzeichnet durch** mindestens ein weiteres in das Kommunikationsnetzwerk (15) eingebundenes Gerät (11,12) mit einer korrespondierenden Kommunikationseinrichtung (10), wobei das Gerät (11,12) ausgewählt ist und/oder mit einer Einrichtung ausgestattet ist aus der Gruppe: Datenspeichereinrichtung, Akkumulator (13) für das Saugreinigungsgerät (3), Bewegungssensor, Bilderfassungseinrichtung, Ultraschallsensor, Mikrofon, Funkmodul, Haushaltsgerät, Unterhaltungsgerät, Fernsteuereinrichtung.

9. Verfahren zum Regenerieren einer Filterkammer (2) eines Saugreinigungsgerätes (3) mittels einer Sauggutsammelstation (1), wobei das Saugreinigungsgerät (3) mit einer Schnittstelle (4) der Sauggutsammelstation (1) verbunden wird und in der Filterkammer (2) vorhandenes Sauggut mittels eines von einem Elektromotor (7) angetriebenen Gebläses (6) der Sauggutsammelstation (1) in einen Sauggutsammelbehälter (5) der Sauggutsammelstation (1) überführt wird, **dadurch gekennzeichnet, dass** eine Steuer- und Auswerteeinrichtung (8) einen Umgebungsstörungsparameter berechnet, der einen Grad einer potenziellen Störung der Umgebung durch einen Betrieb des Gebläses (6) der Sauggutsammelstation (1) angibt, und den Betrieb des Elektromotors (7) automatisch in Abhängigkeit von dem Umgebungsstörungsparameter und einem Geräteparameter des Saugreinigungsgerätes (3) steuert, und wobei eine Detektionseinrichtung (9) der Sauggutsammelstation (1) einen Anwesenheitsparameter in der Umgebung der Sauggutsammelstation (1) und/ oder einen Geräteparameter detektiert, und/ oder eine Kommunikationseinrichtung (10) der Sauggutsammelstation (1) eine Information über den Anwesenheitsparameter und/oder Geräteparameter empfängt.

10. Verfahren nach Anspruch 9, **dadurch gekennzeichnet, dass** die Detektionseinrichtung (9) der Sauggutsammelstation (1) als Anwesenheitsparameter eine Anwesenheit eines Menschen, eines Tieres und/oder eines in der Umgebung betriebenen Gerätes (11, 12) detektiert, und/oder dass die Detektionseinrichtung (9) als Geräteparameter einen Status des Saugreinigungsgerätes (3), nämlich einen Füllstand der Filterkammer (2), einen Ladestatus eines Akkumulators (13), eine Reinigungshistorie und/ oder einen Verschmutzungszustand des Saugreinigungsgerätes (3) detektiert.

11. Verfahren nach Anspruch 9, **dadurch gekennzeichnet, dass** eine Detektionseinrichtung (9) des Saugreinigungsgerätes (3) oder eines in der Umgebung betriebenen Gerätes (11,12) als Anwesenheitsparameter eine Anwesenheit eines Menschen, eines Tieres und/ oder eines in der Umgebung betriebenen Gerätes (11,12) detektiert, und/oder dass die Detektionseinrichtung (9) als Geräteparameter einen Status des Saugreinigungsgerätes (3), nämlich einen Füllstand der Filterkammer (2), einen Ladestatus eines Akkumulators (13), eine Reinigungshistorie und/ oder einen Verschmutzungszustand des Saugreinigungsgerätes (3) detektiert, wobei eine Kommunikationseinrichtung (10) des Saugreinigungsgerätes (3) oder des Gerätes (11,12) eine Information über den Anwesenheitsparameter und/oder Geräteparameter an die Sauggutsammelstation (1) übermittelt, und wobei ein Betrieb des Gebläses (6) der Sauggutsammelstation (1) automatisch in Abhängigkeit von dem Anwesenheitsparameter und/ oder dem Geräteparameter gesteuert wird.

## Claims

1. A suction material collecting station (1) for regenerating a filter chamber (2) of a suction cleaner (3), wherein the suction material collecting station (1) has an interface (4) for connecting to the suction cleaner (3), a suction material collection container (5), a fan (6) for generating a negative pressure in the suction material collection container (5), and an electric motor (7) for driving the fan (6) so that suction material contained in the filter chamber (2) of the suction cleaner (3) may be conveyed by means of the fan (6) into the suction material collection container (5), **characterized in that** the suction material collecting station (1) has a control and evaluation unit (8) which is equipped to calculate a surroundings disturbance parameter, which indicates a degree of potential disturbance of the surroundings by an operation of the fan (6) of the suction material collecting station (1), and to control the operation of the electric motor (7) automatically, depending on the surroundings disturbance parameter and a device parameter of the suction cleaner (3), wherein the suction material collecting station (1) additionally has a detection device (9) for detecting a presence parameter in the surroundings of the suction material collecting station (1) and/or a device parameter and/or a communication device (10) for receiving information about the presence parameter and/or device parameter.

2. The suction material collecting station (1) according to claim 1, **characterized in that** the detection device (9) has an image capture device, an ultrasonic sensor, a microphone, a radio module, and/or a movement sensor.

3. The suction material collecting station (1) according to claim 1 or 2, **characterized in that** the presence parameter is the presence of a person, and animal, and/or a device (11, 12) operated in the surroundings.

4. The suction material collecting station (1) according to one of the preceding claims, **characterized in that** the device parameter is a status of the suction cleaner (3), namely a fill level of the filter chamber (2), a charge status of an accumulator (13), a cleaning history, and/or a degree of contamination of the suction cleaner (3) .

5. A system made from a suction material collecting station (1) designed according to one of claims 1 to 4 and a suction cleaner (3), wherein the suction cleaner (3) has a filter chamber (2) for collecting suction material during a suction cleaning operation and at least one device partial area (14) designed corresponding to the interface (4) of the suction material collecting station (1), by means of which device partial area the suction cleaner (3) is connectable to the suction material collecting station (1) to regenerate the filter chamber (2).

6. The system according to claim 5, **characterized in that** the suction material collecting station (1) and the suction cleaner (3) have communication devices (10) corresponding to one another.

7. The system according to claim 5 or 6, **characterized in that** the system additionally has a wireless communication network (15) with an access point (16), wherein the communication devices (10) of the suction material collecting station (1) and the suction cleaner (3) are designed to communicate with the access point (16).

8. The system according to claim 7, **characterized by** at least one additional device (11, 12), linked into the communication network (15), with a corresponding communication device (10), wherein the device (11, 12) is selected and/or equipped with a device from the group: data memory device, accumulator (13) for the suction cleaner (3), movement sensor, image capture device, ultrasonic sensor, microphone, radio module, household appliance, entertainment device, remote control device.

9. A method for regenerating a filter chamber (2) of a suction cleaner (3) by means of a suction material collecting station (1), wherein the suction cleaner (3) is connected to an interface (4) of the suction material collecting station (1), and suction material present in the filter chamber (2) is transferred into a suction material collection container (5) of the suction material collecting station (1) by means of a fan (6) of the suction material collecting station (1) driven by an electric motor (7), **characterized in that** a control and evaluation unit (8) calculates a surroundings disturbance parameter that indicates a degree of potential disturbance of the surroundings by operating the fan (6) of the suction material collecting station (1), and which controls the operation of the electric motor (7) automatically, depending on the surroundings disturbance parameter and a device parameter of the suction cleaner (3), and, wherein a detection device (9) of the suction material collecting station (1) detects a presence parameter in the surroundings of the suction material collecting station (1) and/or a device parameter, and/or a communication device (10) of the suction material collecting station (1) receives information about the presence parameter and/or device parameter.

10. The method according to claim 9, **characterized in that** the detection device (9) of the suction material collecting station (1) detects a presence of a person, an animal, and/or a device (11, 12) operated in the surroundings as the presence parameter, and/or that the detection device (9) detects a status of the suction cleaner (3), namely a fill level of the filter chamber (2), a charge status of an accumulator (13), a cleaning history, and/or a contamination state of the suction cleaner (3) as a device parameter.

11. The method according to claim 9, **characterized in that** a detection device (9) of the suction cleaner (3), or of a device (11, 12) operated in the surroundings, detects a presence of a person, an animal, and/or a device (11, 12) operated in the surroundings as the presence parameter, and/or that the detection device (9) detects a status of the suction cleaner (3), namely a fill level of the filter chamber (2), a charge status of an accumulator (13), a cleaning history, and/or a contamination state of the suction cleaner (3) as a device parameter, wherein a communication device (10) of the suction cleaner (3) or of the device (11, 12) transmits information about the presence parameter and/or device parameter to the suction material collecting station (1), and wherein an operation of the fan (6) of the suction material collecting station (1) is controlled automatically, depending on the presence parameter and/or the device parameter.

## Revendications

1. Station de collecte de matériau d'aspiration (1) pour régénérer une chambre de filtration (2) d'un appareil de nettoyage par aspiration (3), la station de collecte de matériau d'aspiration (1) ayant une interface (4) pour le raccordement de l'appareil de nettoyage par aspiration (3), un récipient de collecte de matériau d'aspiration (5), un souffleur (6) pour générer une dépression dans le récipient de collecte de matériau d'aspiration (5) et un moteur électrique (7) pour entraîner le souffleur (6) de manière que le matériau d'aspiration contenu dans la chambre de filtration (2) de l'appareil de nettoyage par aspiration (3) puisse être transporté dans le récipient de collecte de matériau d'aspiration (5) au moyen du souffleur (6), **caractérisé en ce que** la station de collecte du matériau d'aspiration (1) présente un dispositif de commande et d'évaluation (8) qui est configuré pour calculer un paramètre de perturbation de l'environnement indiquant un degré de perturbation potentielle de l'environnement par un fonctionnement du souffleur (6) de la station de collecte de matériau d'aspiration (1), et pour commander automatiquement le fonctionnement du moteur électrique (7) en fonction du paramètre de perturbation de l'environnement et d'un paramètre d'appareil de l'appareil de nettoyage par aspiration (3), la station de collecte de matériau d'aspiration (1) comprenant en outre un dispositif de détection (9) pour détecter un paramètre de présence dans l'environnement de la station de collecte de matériau d'aspiration (1) et/ou un paramètre d'appareil et/ou un dispositif de communication (10) pour recevoir une information sur le paramètre de présence et/ou le paramètre d'appareil.

2. Station de collecte de matériau d'aspiration (1) selon la revendication 1, **caractérisée en ce que** le dispositif de détection (9) comprend un dispositif d'acquisition d'images, un capteur à ultrasons, un microphone, un module radio et/ou un capteur de mouvement.

3. Station de collecte de matériau d'aspiration (1) selon la revendication 1 ou 2, **caractérisée en ce que** le paramètre de présence est une présence d'un humain, d'un animal et/ou d'un appareil (11, 12) fonctionnant dans l'environnement.

4. Station de collecte de matériau d'aspiration (1) selon l'une des revendications précédentes, **caractérisée en ce que** le paramètre d'appareil est un état de l'appareil de nettoyage par aspiration (3), à savoir un niveau de remplissage de la chambre de filtration (2), un état de charge d'un accumulateur (13), un historique de nettoyage et/ou un état d'encrassement de l'appareil de nettoyage par aspiration (3).

5. Système composé d'une station de collecte de matériau d'aspiration (1) conçue selon l'une des revendications 1 à 4 et d'un appareil de nettoyage par aspiration (3), dans lequel l'appareil de nettoyage par aspiration (3) présente une chambre de filtration (2) pour collecter du matériau d'aspiration lors d'une opération de nettoyage par aspiration et au moins une région partielle d'appareil (14) conçue pour correspondre à l'interface (4) de la station de collecte de matériau d'aspiration (1), au moyen de laquelle l'appareil de nettoyage par aspiration (3) peut être relié à la station de collecte de matériau d'aspiration (1) pour régénérer la chambre de filtration (2).

6. Système selon la revendication 5, **caractérisé en ce que** la station de collecte de matériau d'aspiration (1) et l'appareil de nettoyage par aspiration (3) présentent des dispositifs de communication mutuellement correspondants (10).

7. Système selon la revendication 5 ou 6, **caractérisé en ce que** le système comprend en outre un réseau de communication sans fil (15) avec un point d'accès (16), dans lequel les dispositifs de communication (10) de la station de collecte de matériau d'aspiration (1) et de l'appareil de nettoyage par aspiration (3) sont conçus pour communiquer avec le point d'accès (16).

8. Système selon la revendication 7, **caractérisé par** au moins un autre appareil (11, 12) intégré dans le réseau de communication (15) et ayant un dispositif de communication correspondant (10), l'appareil (11, 12) étant sélectionné parmi et/ou équipé d'un dispositif du groupe : dispositif de stockage de données, accumulateur (13) pour l'appareil de nettoyage par aspiration (3), capteur de mouvement, dispositif de capture d'images, capteur à ultrasons, microphone, module radio, appareil ménager, appareil de divertissement, dispositif de télécommande.

9. Procédé de régénération d'une chambre de filtration (2) d'un appareil de nettoyage par aspiration (3) au moyen d'une station de collecte de matériau d'aspiration (1), dans lequel l'appareil de nettoyage par aspiration (3) est relié à une interface (4) de la station de collecte de matériau d'aspiration (1) et le matériau d'aspiration présent dans la chambre de filtration (2) est transféré dans un récipient de collecte de matériau d'aspiration (5) de la station de collecte de matériau d'aspiration (1) au moyen d'un souffleur (6) de la station de collecte de matériau d'aspiration (1) qui est entraîné par un moteur électrique (7), **caractérisé en ce qu'**un dispositif de commande et d'évaluation (8) calcule un paramètre de perturbation de l'environnement qui indique un degré de perturbation potentielle de l'environnement par un fonctionnement du souffleur (6) de la station de collecte de matériau d'aspiration (1), et commande automatiquement le fonctionnement du moteur électrique (7) en fonction du paramètre de perturbation de l'environnement et d'un paramètre d'appareil de l'appareil de nettoyage par aspiration (3), et dans lequel un dispositif de détection (9) de la station de collecte de matériau d'aspiration (1) détecte un paramètre de présence dans l'environnement de la station de collecte de matériau d'aspiration (1) et/ou un paramètre de d'appareil, et/ou un dispositif de communication (10) de la station de collecte de matériau d'aspiration (1) reçoit une information sur le paramètre de présence et/ou le paramètre d'appareil.

10. Procédé selon la revendication 9, **caractérisé en ce que** le dispositif de détection (9) de la station de collecte de matériau d'aspiration (1) détecte, en tant que paramètre de présence, la présence d'un humain, d'un animal et/ou d'un appareil (11, 12) fonctionnant dans l'environnement, et/ou **en ce que** le dispositif de détection (9) détecte, en tant que paramètre d'appareil, un état de l'appareil de nettoyage par aspiration (3), à savoir un niveau de remplissage de la chambre de filtration (2), un état de charge d'un accumulateur (13), un historique de nettoyage et/ou un état de encrassement de l'appareil de nettoyage par aspiration (3).

11. Procédé selon la revendication 9, **caractérisé en ce qu'**un dispositif de détection (9) de l'appareil de nettoyage par aspiration (3) ou d'un appareil (11, 12) fonctionnant dans l'environnement détecte comme paramètre de présence la présence d'un humain, d'un animal et/ou d'un appareil (11, 12) fonctionnant dans l'environnement, et/ou **en ce que** le dispositif de détection (9) détecte comme paramètre d'appareil un état de l'appareil de nettoyage par aspiration (3), à savoir un niveau de remplissage de la chambre de filtration (2), un état de charge d'un accumulateur (13), un historique de nettoyage et/ou un état de encrassement de l'appareil de nettoyage par aspiration (3), dans lequel un dispositif de communication (10) de l'appareil de nettoyage par aspiration (3) ou de l'appareil (11, 12) transmet une information sur le paramètre de présence et/ou le paramètre d'appareil à la station de collecte de matériau d'aspiration (1), et dans lequel un fonctionnement du souffleur (6) de la station de collecte de matériau d'aspiration (1) est commandé automatiquement en fonction du paramètre de présence et/ou du paramètre d'appareil.
